# EUROPÄISCHE PATENTSCHRIFT

(11) **EP 2 681 066 B1**
(45) Veröffentlichungstag und Bekanntmachung des Hinweises auf die Patenterteilung: **13.08.2014**
(21) Anmeldenummer: 12714543.1
(22) Anmeldetag: 27.02.2012
(51) Int. Cl.: B60K 15/035

(54) **Tankentlüftungs- und Kühlsystem für Hybridfahrzeuge**
TANK VENTILATION AND COOLING SYSTEM FOR HYBRID VEHICLES
SYSTÈME DE VENTILATION ET DE REFROIDISSEMENT DE RÉSERVOIR POUR DES VÉHICULES HYBRIDES

(30) Priorität: 04.03.2011 DE 102011013005
(43) Veröffentlichungstag der Anmeldung: 08.01.2014
(73) Patentinhaber: IAV GmbH Ingenieurgesellschaft Auto und Verkehr, 10587 Berlin (DE)
(72) Erfinder: SEYDELL, Joachim, 38518 Gifhorn (DE); SEEMAYER, Markus, 30916 Isernhagen (DE); STEGEMANN, Frank, 38551 Ribbesbüttel (DE); MAGNOR, Olaf, 38104 Braunschweig (DE); BEESE, Daniel, 38102 Braunschweig (DE); REITEBUCH, Daniel, 10715 Berlin (DE); SCHULTALBERS, Matthias, 38536 Meinersen (DE)
(74) Vertreter: Fukala, Georg
(86) Internationale Anmeldenummer: PCT/DE2012/000174
(87) Internationale Veröffentlichungsnummer: WO 2012/119577

(56) Entgegenhaltungen:
- DE-A1- 3 214 874
- DE-C1- 19 629 165
- GB-A- 2 246 988

## Beschreibung

### Technisches Gebiet

Die vorliegende Erfindung betrifft einen Kraftstofftank für Kraftfahrzeuge. Die erfindungsgemäße Vorrichtung umfasst ein Entlüftungs- und Kühlsystem für den Kraftstofftank und ist für den Einsatz in Hybridfahrzeugen insbesondere für sogenannte Plug-In-Hybridfahrzeuge besonders geeignet.

### Stand der Technik

Kraftfahrzeuge, die mit einer Brennkraftmaschine ausgestattet sind, verfügen über Kraftstofftanks, welche den für den Betrieb der Brennkraftmaschine erforderlichen Kraftstoff speichern. Für Brennkraftmaschinen, die nach dem Otto-Prinzip arbeiten, werden dementsprechend Ottokraftstoffe im Kraftstofftank gespeichert. Herkömmliche flüssige Ottokraftstoffe bestehen aus einem Gemisch verschiedener Kohlenwasserstoffe, deren Verdampfungstemperaturen im Bereich normaler Umgebungstemperaturen oder auch geringerer Temperaturen liegen. Deshalb kommt es bei einer Speicherung von flüssigem Ottokraftstoff im Kraftstofftank zum Verdampfen eines Anteils des Kraftstoffs. Neben dem flüssigen Kraftstoff befindet sich also auch verdampfter, gasförmiger Kraftstoff im Kraftstofftank. Dieser Effekt tritt bei allen Kraftstoffen auf, die unter den normalen Betriebsbedingungen des Motors eine Verdampfungsneigung zeigen. Durch die fortschreitende Verdampfung des flüssigen Kraftstoffs bei entsprechenden Temperaturen, kommt es zu Druckerhöhungen im Kraftstofftank, der mit verschiedenen Mitteln entgegengewirkt wird. Entsprechend aktueller Emissionsvorschriften, deren Einhaltung durch den zulassungsrelevanten SHED-Test ermittelt wird, muss es jedoch vermieden werden, dass diese gasförmigen Kohlenwasserstoffe an die Umgebung gelangen und dort zu Gesundheits- und Umweltschädigungen führen. Zur Vermeidung von hohen Bauteilkosten wird der Kraftstofftank jedoch nicht als Druckbehälter ausgeführt, sondern nur bis zu einer relativen Druckdifferenz von etwa +/- 50 mbar dimensioniert. Zur Vermeidung von Druckbelastungen werden Druckausgleichsysteme verwendet. Dazu sind in herkömmlichen Kraftfahrzeugen neben Tankbelüftungssystemen auch Tankentlüftungssysteme vorgesehen, bei denen der gasförmige Kraftstoff aus dem Kraftstofftank abgeleitet wird und somit eine Druckerhöhung unterbunden wird. Der abgeleitete Kraftstoff wird dann zum Beispiel in einem Aktivkohlebehälter zwischengespeichert und beim Betrieb der Brennkraftmaschinen der Verbrennung über entsprechende Verbindungen, Vorrichtungen und Steuerungen zugeführt. Entsprechend der Speicherkapazität dieser Aktivkohlebehälter sind bestimmte Spülzyklen, in denen der im Aktivkohlebehälter gespeicherte Kraftstoff ausgespült wird, notwendig. Die Spülung kann entweder passiv in bestimmten Betriebspunkten der Brennkraftmaschine oder auch aktiv unter Verwendung zusätzlicher Pumpen erfolgen. Kann der Aktivkohlebehälter nicht gespült werden, da das Kraftfahrzeug zum Beispiel längere Zeit stillsteht, wird die maximale Aufnahmekapazität erreicht. Die Filterwirkung des Aktivkohlefilters geht verloren und es wird verdampfter Kraftstoff an die Umgebung abgegeben. Hier spricht man im Allgemeinen vom Durchbrechen des Aktivkohlefilters. Alternativ sind auch Systeme bekannt, welche den abgeleiteten gasförmigen Kraftstoff durch die Verwendung von Kühlsystemen verflüssigen und den kondensierten Kraftstoff wieder in den Kraftstofftank zurückführen. Die Wirkung des Tankentlüftungssystems zeigt sich vor allem bei der Erwärmung des Ottokraftstoffs durch hohe Umgebungstemperaturen, durch Abwärme beim Betrieb der Brennkraftmaschine und durch mechanische Verluste in der Kraftstoffversorgung, wie zum Beispiel in der Kraftstoffpumpe. Auch Emissionen, die durch lange Standzeiten des Kraftfahrzeugs oder auch beim Nachtanken von Kraftstoff entstehen würden, können vermieden werden.

Sind aber im Kraftfahrzeug neben der Brennkraftmaschine weitere Antriebsaggregate, wie zum Beispiel elektromotorische Antriebe, vorgesehen, verändern sich die Spülzyklen. Wird beim Betrieb des Kraftfahrzeuges der elektromotorische Antrieb häufiger oder vorrangig angewendet, stehen weniger Zyklen zur Spülung des Aktivkohlebehälters zur Verfügung Wird die Brennkraftmaschine nur als Nebenaggregat verwendet, um zum Beispiel die Reichweite des Kraftfahrzeugs zu erhöhen, muss die Einsatzbereitschaft stets sichergestellt sein und ausreichend viel Kraftstoff mitgeführt werden. Dann verschärft sich das Problem weiter, da ein Betrieb der Brennkraftmaschinen nur in Ausnahmefällen erforderlich ist. Dann wird die Brennkraftmaschine nur in wirkungsgradoptimalen Betriebspunkten betrieben, in denen die konventionelle Tankentlüftung nicht arbeiten kann. Emissionen, die durch verdampften Kraftstoff entstehen, müssen jedoch auch hier vermieden werden. Der Kraftstofftank kann als Druckbehälter ausgeführt sein, was sich aber als nachteilig für Bauteilkosten, Bauteilgewicht und auch bedingt durch den hohen Behälterdruck für das Nachtanken darstellt. Herkömmliche Systeme mit einer Zwischenspeicherung und anschließender Zufuhr zur Verbrennung in Brennkraftmaschinen sind dafür nicht geeignet. Weiterhin sind Systeme zum Beispiel aus der Offenlegungsschrift DE 10 2008 047721 A1 bekannt, die eine Zwischenspeicherung der gasförmigen Kohlenwasserstoffe in einem Zusatztank vornehmen, der als Druckbehälter ausgelegt ist. Aus der Offenlegungsschrift DE 10 2007 051 469 A1 ist ein Kraftstofftank mit einer Entlüftungsleitung mit einer Kondensatoreinrichtung vorgesehen, wobei der Kondensator eine Kühlung und somit eine Verflüssigung des gasförmigen Kraftstoffs bewirkt. Dadurch wird die Rückführung des verflüssigten Kraftstoffs in den Kraftstofftank ermöglicht. Der Kondensator wird mit einem Kühlmittel aus einer Absorptions- oder Kompressionskälteanlage betrieben.

Aus der Offenlegungsschrift DE 27 56 348 A1 ist eine Absorptionskälteanlage bekannt, mit der ein Fahrgast- und Nutzraum eines Kraftfahrzeuges temperiert wird. In einer vorteilhaften Ausgestaltung wird zudem der Kraftstoff mittels eines Kraftstoffkühlers gekühlt. Die Absorptionskälteanlage wird dabei von abwärmeerzeugenden Antriebsaggregaten des Kraftfahrzeugs gespeist. Als Wärmequelle werden die Abwärme der Brennkraftmaschine selbst und die Abwärme des Öls von Getrieben oder Retardern beschrieben.

In der gattungsgemäßen Patentschrift DE 32 14 874 C2 wird eine Vorrichtung zum Kühlen von Kraftstoff im Kraftstofftank beschrieben. Dabei wird ein als Verdampfer dienender Wärmetauscher oder ein Wärmetauscher, der einem Verdampfer nachgeschaltet ist, im Kraftstofftank installiert.

Kühl-, Verflüssigungs- und Speichersysteme, die im Kraftstofftank oder auch in Kraftstoffrückführungen integriert sind und unter Einsatz elektrischer Energie arbeiten, oder die Energie aus dem Betrieb einer Brennkraftmaschine beziehen, sind in Anbetracht der Reichweitenoptimierung von Elektro- und Hybridfahrzeugen ebenfalls ungeeignet.

### Aufgabe der Erfindung

Die Aufgabe der Erfindung besteht darin, ein Druckausgleichsystem für einen Kraftstofftank eines Hybrid-Fahrzeuges bereitzustellen.

### Lösung der Aufgabe

Die Aufgabe wird durch ein Druckausgleichsystem für einen Kraftstofftank eines Hybrid-Fahrzeuges nach den Merkmalen des Patentanspruches 1 und durch ein Verfahren zum Betreiben des Systems nach den Merkmalen des Patentanspruchs 5 gelöst. Vorteilhafte Ausgestaltungen des Tankentlüftungs- und Kühlsystems für Hybridfahrzeuge sind in den abhängigen Ansprüchen angeführt.

### Beschreibung der Erfindung

Die vorteilhafte Erfindung stellt ein Entlüftungs- und Kühlsystem für einen Kraftstofftank zum Einsatz in Hybridfahrzeugen bereit, das in besonders vorteilhafter Weise den Kraftstoff in einem Kraftstofftank kühlt, um ein Verdampfen von Kraftstoff zu vermindern. Dafür wird eine Absorptionskältemaschine vorgeschlagen, deren thermische Energie zum Betreiben der Anlage aus der Abgaswärme einer Brennkraftmaschine oder aus der Verbrennung von Kraftstoffdampf, der aus dem Kraftstofftank abgeleitet wird, gewonnen wird. Durch die Ableitung verdampften Kraftstoffs und die Kühlung des flüssigen Kraftstoffs kann die Druckbelastung im Kraftstofftank und somit die Gefahr von Kohlenwasserstoffemissionen minimiert werden.

Die vorgeschlagene Vorrichtung senkt durch die Ableitung beziehungsweise durch die Entnahme von verdampftem, gasförmigen Ottokraftstoff den Gasdruck im Kraftstofftank, so dass dieser entlastet wird. Der dann zur Energiezufuhr für die Absorptionskältemaschine in einem Brenner verbrannte gasförmige Ottokraftstoff fällt weder im SHED-Test, noch durch Geruchsbildung nachteilig auf, da er im Idealfall zu Kohlendioxid und Wasser verbrennt. Der in einem konventionellen System sonst an die Umgebung über den gesättigten Aktivkohlefilter oder über ein Notventil abgegebene gasförmige Ottokraftstoff wird mit der vorgeschlagenen Vorrichtung sinnvoll genutzt, indem die in ihm gebundene Energie dazu genutzt wird, den flüssigen Ottokraftstoff im Kraftstofftank zu kühlen. Die in einem konventionellen System sonst an die Umgebung abgegebene thermische Energie der Brennkraftmaschine wird teilweise sinnvoll genutzt, indem zum Beispiel die Abgasenergie zur Kühlung des flüssigen Ottokraftstoffes im Kraftstofftank verwendet wird. Durch die Absenkung der Temperatur des flüssigen Ottokraftstoffes wird die Verdampfungsneigung des flüssigen Ottokraftstoffes im Kraftstofftank herabgesetzt.

Die vorgeschlagene vorteilhafte Vorrichtung arbeitet zudem vorsorgend und selbststabilisierend, indem die während des Betriebs der Brennkraftmaschine freiwerdende Abwärme des Abgases oder sonstige Abwärme dazu genutzt wird, um den flüssigen Ottokraftstoff im Kraftstofftank zu kühlen. Während des Stillstands der Brennkraftmaschine wird nur solange gekühlt, wie abzubauender Überdruck im Kraftstofftank vorhanden ist. Dadurch wird das Problem des verdampfenden Kraftstoffs insgesamt abgesenkt. Ein weiterer Vorteil der erfindungsgemäßen Vorrichtung liegt darin, dass die Ausführung im Vergleich zum Einsatz eines Drucktanks kostengünstiger und leichter ist. Die neue Vorrichtung kommt im Vergleich zu einem Verfahren mit Kompression in einen Druckbehälter ohne elektrische Energie, ohne bewegte Teile und ohne Geräuschentwicklung aus.

Weiterhin wird ein Verfahren zum Betreiben des erfindungsgemäßen Entlüftungs- und Kühlsystems vorgeschlagen, bei dem die Quelle der thermischen Energie zum Betrieb der Absorptionskältemaschine in Abhängigkeit vom Betriebszustand der Brennkraftmaschine ausgewählt wird. So steht beim Stillstand der Brennkraftmaschine thermische Energie nur durch die Verbrennung des gasförmigen Kraftstoffs zur Verfügung. Beim Betrieb der Brennkraftmaschine kann zusätzlich thermische Energie aus der Abwärme der Brennkraftmaschine genutzt werden. Dementsprechend wird beim Stillstand der Brennkraftmaschine die Verbrennung von gasförmigem Kraftstoff aus dem Kraftstofftank ausgewählt und beim Betrieb der Brennkraftmaschine zusätzlich die Abwärme der Brennkraftmaschine genutzt. In einer vorteilhaften Ausgestaltung des Verfahrens kann dabei die Nutzung der Abwärme bevorzugt erfolgen und auf die Verbrennung des gasförmigen Kraftstoffs verzichtet werden.

### Ausführungsbeispiel

Beispielhaft wird hier eine Ausführung der erfindungsgemäßen Vorrichtung dargestellt. In der dazugehörigen Figur zeigt:

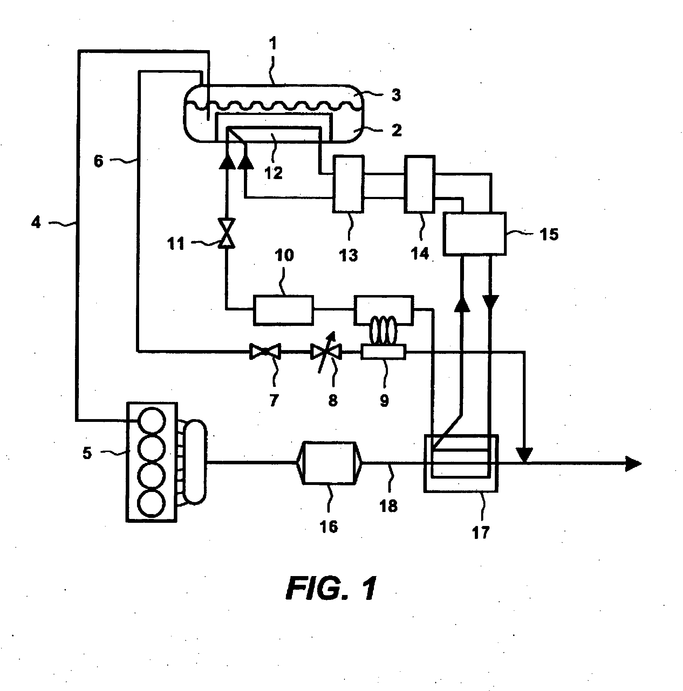

**Fig. 1****:** eine schematische Darstellung eines Entlüftungs- und Kühlsystems für einen Kraftstofftank zum Einsatz in Hybridfahrzeugen.

Die Vorrichtung beinhaltet einen Kraftstofftank **(1),** indem sich ein flüssiger Kraftstoff **(2)** mit Verdampfungsneigung, beispielsweise Ottokraftstoff, befindet. Weiterhin beinhaltet der Kraftstofftank **(1)** gasförmigen Kraftstoff **(3),** welcher durch Verdampfen eines Teils des flüssigen Kraftstoffs entstanden ist. Für die Kraftstoffversorgung ist eine Kraftstoffversorgungsleitung **(4)** zu einer Brennkraftmaschine **(5)** vorgesehen. Weiterhin ist eine Entnahmeleitung **(6)** vorgesehen, über welche der gasförmige Kraftstoff **(3)** aus dem Kraftstofftank **(1)** entnommen wird und über einen Druckregler **(7)** und ein Zumessventil **(8)** einem Brenner **(9)** zuführt wird. Durch das Zumessventil **(8)** kann die Versorgung des Brenners **(9)** mit Kraftstoffdampf, z. B. über das Motorsteuergerät des Fahrzeuges, zu- und abgeschaltet werden. Der Druckregler dient der Begrenzung des Druckes vor der Zufuhr zum Brenner **(9).**

Der Brenner **(9)** erhitzt ein noch flüssiges Kältemedium, zum Beispiel Ammoniak, soweit, dass es verdampft und dabei einen Gasdruck aufbaut. In einem nachgeschalteten Kondensator **(10)** kondensiert das Kältemedium unter Wärmeabgabe. Eine Drossel **(11)** mindert den Druck, wodurch die Siedetemperatur des Kältemediums abnimmt und dieses im Verdampfer **(12)** verdampfen kann. Die für die Verdampfung erforderliche Wärme wird dem flüssigen Kraftstoff aus dem Kraftstofftank **(1)** entnommen, wodurch sich der Kraftstoff abkühlt. Die Verdampfung wird durch ein Hilfsmedium, zum Beispiel Helium gefördert, indem dieses den Druckausgleich vornimmt. Hierfür wird das Hilfsmedium durch einen Gaswärmetauscher **(13)** zugunsten eines besseren Wirkungsgrades zunächst auf ein niedrigeres Temperaturniveau gebracht. Die Verdampfung würde zum Erliegen kommen, wenn der Sättigungsdampfdruck im Verdampfer **(12)** erreicht ist. Daher wird das Kältemedium in einem Absorber **(14)** von einem Absorptionsmedium, zum Beispiel Wasser, absorbiert. Der Kreislauf des Absorptionsmediums wird durch die im Brenner **(9)** zugeführte Energie aufrechterhalten, wobei in einem Wärmetauscher **(15)** eine Anhebung des Temperaturniveaus des Absorptionsmittels erfolgt. Die Energiezufuhr für die Absorptionskältemaschine erfolgt nicht nur über den Brenner **(9),** sondern zusätzlich über einen nach einem Abgaskatalysator **(16)** positionierten Abgaswärmetauscher **(17),** der Wärme aus dem Abgasstrang **(18)** der Brennkraftmaschine **(5)** in die Kältemaschine transportiert.

### Aufstellung der verwendeten Bezugszeichen

- 1: Kraftstofftank
- 2: flüssiger Kraftstoff
- 3: gasförmiger Kraftstoff
- 4: Kraftstoffversorgungsleitung
- 5: Brennkraftmaschine
- 6: Entnahmeleitung
- 7: Druckregler
- 8: Zumessventil
- 9: Brenner
- 10: Kondensator
- 11: Drossel
- 12: Verdampfer
- 13: Gaswärmetauscher
- 14: Absorber
- 15: Wärmetauscher
- 16: Abgaskatalysator
- 17: Abgaswärmetauscher
- 18: Abgasstrang

## Patentansprüche

1. Entlüftungs- und Kühlsystem für einen Kraftstofftank (1) einer Brennkraftmaschine (5), wobei eine Absorptionskältemaschine zum Kühlen des Kraftstoffs im Kraftstofftank (1) vorgesehen ist, wobei die Absorptionskältemaschine zumindest einen Brenner (9), einen Verdampfer (12) und einen Abgaswärmetauschen (17) umfasst, **dadurch gekennzeichnet, dass** die thermische Energie zum Betreiben der Absorptionskältemaschine aus der Verbrennung von verdampftem Kraftstoff (3) gewonnen wird, wobei der verdampfte Kraftstoff (3) aus dem Kraftstofftank (1) entnommen und dem Brenner (9) der Absorptionskältemaschine zugeführt wird.

2. Entlüftungs- und Kühlsystem für einen Kraftstofftank (1) nach Patentanspruch 1, **dadurch gekennzeichnet, dass** thermische Energie zum Betreiben der Absorptionskältemaschine zusätzlich aus der Abwärme der Brennkraftmaschine (5) gewonnen wird.

3. Entlüftungs- und Kühlsystem für einen Kraftstofftank (1) nach einem der vorherigen Ansprüche, **dadurch gekennzeichnet, dass** der Verdampfen (12) der Absorptionskältemaschine im Inneren des Kraftstofftanks (1) angeordnet ist.

4. Entlüftungs- und Kühlsystem für einen Kraftstofftank (1) nach einem der vorherigen Ansprüche, **dadurch gekennzeichnet, dass** der Abgaswärmetauschen (17) der Absorptionskältemaschine an einer Abgasanlage (18) der Brennkraftmaschine (5) angeordnet ist.

5. Verfahren zum Betreiben eines Entlüftungs- und Kühlsystems, wobei eine Absorptionskältemaschine zum Kühlen des Kraftstoffs im Kraftstofftank (1) vorgesehen ist, wobei die Absorptionskältemaschine zumindest einen Brenner (9), einen Verdampfer (12) und einen Abgaswärmetauscher (17) umfasst, **dadurch gekennzeichnet, dass** eine Auswahl zur Quelle der thermischen Energie in Abhängigkeit vom Betriebszustand der Brennkraftmaschine (5) erfolgt, wobei beim Stillstand der Brennkraftmaschine (5) thermische Energie durch die Verbrenung des gasförmigen Kraftstoffs (3) oder beim Betrieb der Brennkraftmaschine (5) zusätztich thermische Energie aus der Abwärme der Brennkraftmaschine (5) nutzbar ist und die Nutzung der Abwärme bevorzugt ausgewählt wird.

## Claims

1. Ventilation and cooling system for a fuel tank (1) of an internal combustion engine (5), whereupon an absorption refrigerator is configured to cool fuel in the fuel tank (1), whereupon the absorption refrigerator comprises a burner (9), an evaporator (12) and an exhaust-gas heat exchanger (17), **characterized in that** thermal energy for operating the absorption refrigerator is obtained from the combustion of evaporated fuel (3), whereupon the evaporated fuel (3) being removed from the fuel tank (1) and supplied to the burner (9) of the absorption refrigerator.

2. Ventilation and cooling system for a fuel tank (1) according to claim 1, **characterized in that** thermal energy for operating the absorption refrigerator is also obtained from the waste heat of the internal combustion engine (5).

3. Ventilation and cooling system for a fuel tank (1) according to any one of the preceding claims, **characterized in that** the evaporator (12) of the absorption refrigerator is arranged inside the fuel tank (1).

4. Ventilation and cooling system for a fuel tank (1) according to any one of the preceding claims, **characterized in that** the exhaust-gas heat exchanger (17) of the absorption refrigerator is arranged on an exhaust-gas system (18) of the internal combustion engine (5).

5. Method for operation of a ventilation and cooling system, whereupon an absorption refrigerator is configured to cool fuel in a fuel tank (1), whereupon the absorption refrigerator comprises a burner (9), an evaporator (12) and an exhaust-gas heat exchanger (17), **characterized in that** a selection of the source of thermal energy for the absorption refrigerator based on an state of an internal combustion engine (5) is carried out, whereupon when the internal combustion engine (5) is in a stopped state, the use of thermal energy from the combustion of gaseous fuel (3) is selected or during the operation of the internal combustion engine (5) in addition thermal energy from the waste heat of the internal combustion engine (5) is used and the use of the waste heat is preferably selected.

## Revendications

1. Système de ventilation et de refroidissement pour un réservoir de carburant (1) d'un moteur à combustion interne (5), une machine réfrigérante à absorption pour refroidir le carburant étant prévue dans le réservoir de carburant (1), la machine réfrigérante à absorption comprenant au moins un brûleur (9), un évaporateur (12) et un échangeur de chaleur à gaz d'échappement (17), **caractérisé en ce que** l'énergie thermique pour faire fonctionner la machine réfrigérante à absorption est obtenue à partir de la combustion du carburant évaporé (3), le carburant évaporé (3) étant prélevé du réservoir de carburant (1) et étant acheminé au brûleur (9) de la machine réfrigérante à absorption.

2. Système de ventilation et de refroidissement pour un réservoir de carburant (1) selon la revendication 1, **caractérisé en ce que** l'énergie thermique pour faire fonctionner la machine réfrigérante à absorption est en outre obtenue à partir de la chaleur perdue du moteur à combustion interne (5).

3. Système de ventilation et de refroidissement pour un réservoir de carburant (1) selon l'une quelconque des revendications précédentes, **caractérisé en ce que** l'évaporateur (12) de la machine réfrigérante à absorption est disposé à l'intérieur du réservoir de carburant (1).

4. Système de ventilation et de refroidissement pour un réservoir de carburant (1) selon l'une quelconque des revendications précédentes, **caractérisé en ce que** l'échangeur de chaleur à gaz d'échappement (17) de la machine réfrigérante à absorption est disposé au niveau d'une installation de gaz d'échappement (18) du moteur à combustion interne (5).

5. Procédé pour faire fonctionner un système de ventilation et de refroidissement, une machine réfrigérante à absorption pour refroidir le carburant étant prévue dans le réservoir de carburant (1), la machine réfrigérante à absorption comprenant au moins un brûleur (9), un évaporateur (12) et un échangeur de chaleur à gaz d'échappement (17), **caractérisé en ce que** l'on effectue un choix de la source d'énergie thermique en fonction de l'état de fonctionnement du moteur à combustion interne (5), où, à l'arrêt du moteur à combustion interne (5), de l'énergie thermique obtenue par la combustion du carburant gazeux (3) peut être utilisée, ou, pendant le fonctionnement du moteur à combustion interne (3), de l'énergie thermique obtenue en plus à partir de la chaleur perdue du moteur à combustion interne (5) peut être utilisée, et l'utilisation de la chaleur perdue étant choisie de manière préférentielle.
